# FASCICULE DE BREVET EUROPEEN

(11) **EP 0 600 757 B1**
(45) Date de publication et mention de la délivrance du brevet: **14.06.1995**
(21) Numéro de dépôt: 93402345.8
(22) Date de dépôt: 24.09.1993
(51) Int. Cl.: B23K 26/08, B23K 37/04

(54) **Dispositif de positionnement de flans de tôle dans une installation de soudage bord à bord en continu de ces flans de tôle**
Positioniervorrichtung für Blechtafeln in einer Schweisseinrichtung zum kontinuierlichen Stumpfschweissen dieser Blechtafeln
Positioning device for metal plates within a welding arrangement for continuously butt-welding these metal plates

(30) Priorité: 30.11.1992 FR 9214409
(43) Date de publication de la demande: 08.06.1994
(73) Titulaire: SOLLAC, 92800 Puteaux (FR)
(72) Inventeur: Peru, Gilles, F-59240 Dunkerque (FR); Sauvage, Francis, F-59240 Dunkerque (FR); Le Roy, Yvon, F-59940 Le Doulieu (FR); Sion, Charles, F-59133 Camphin-en-Carembault (FR)
(74) Mandataire: Lanceplaine, Jean-Claude

(56) Documents cités:
- EP-A- 0 438 612

## Description

La présente invention a pour objet un dispositif de positionnement de flans de tôle dans une installation de soudage bord à bord en continu d'au moins deux flans de tôle au moyen d'un faisceau laser, selon le préambule de la revendication 1 (voir p.ex. EP-A-438612).

Le soudage au moyen d'un faisceau laser d'au moins deux flans de tôle a trouvé un débouché industriel important notamment dans la production de pièces raboutées et soudées, par exemple pour l'industrie automobile.

En effet, deux flans de tôle raboutés, c'est à dire assemblés bord à bord sans recouvrement, et soudés au moyen d'un faisceau laser, conservent toutes leurs facultés d'emboutissabilité.

Les flans de tôle peuvent être de différentes formes géométriques et/ou de différentes épaisseurs, voire posséder des nuances d'acier différentes.

Pour réaliser un raboutage et un soudage corrects au moyen d'un faisceau laser d'au moins deux flans de tôle afin que la capacité d'emboutissage des flans de tôle soudés reste optimale, il est nécessaire que les flans de tôle à souder soient disposés avec leurs bords l'un contre l'autre sans interstices et dans le cas de flans de tôle de différentes formes, il faut que leur positionnement longitudinal l'un par rapport à l'autre soit parfait.

De plus, il est indispensable d'assurer d'une part, un positionnement latéral parfait des flans de tôle afin que le plan de joint des deux tôles se situe dans l'axe du faisceau laser et, d'autre part, un maintien en référence longitudinal et latéral desdits flans de tôle pendant leur déplacement pour conserver le plan de joint desdites tôles dans l'axe du faisceau laser.

Dans le cas d'une installation industrielle, le positionnement des flans de tôle doit être réalisé en continu.

Par conséquent, une installation industrielle doit permettre la réception des flans de tôle, le positionnement desdits flans de tôle l'un par rapport à l'autre et par rapport à l'axe du faisceau laser, et cela pendant leur déplacement vers ce faisceau laser, puis conserver cette mise en référence pendant leur déplacement et assurer le soudage des flans de tôle et leur évacuation.

La présente invention a donc pour but de proposer un dispositif de positionnement des flans de tôle dans une installation de soudage bord à bord en continu d'au moins deux flans de tôle au moyen d'un faisceau laser permettant de positionner les bords à souder des flans de tôle dans l'axe du faisceau laser quels que soient le profil et les dimensions des flans de tôle à souder.

L'invention a donc pour objet un dispositif de positionnement de flans de tôle dans une installation de soudage bord à bord en continu d'au moins deux desdits flans de tôle au moyen d'un faisceau laser, ledit dispositif comportant des moyens de support selon un plan de référence horizontal et d'entraînement des flans de tôle en direction du faisceau laser et des moyens de positionnement latéral des bords à souder des flans de tôle dans l'axe du faisceau laser, caractérisé en ce que lesdits moyens de support et d'entraînement des flans de tôle comprennent, d'une part, une table de transfert formée par une alternance de rails à billes et de bandes munies de plots en saillie, régulièrement espacés et, d'autre part, des organes à friction destinés à s'appliquer sur la face supérieure des flans de tôle et à imprimer auxdits flans de tôle une translation sensiblement perpendiculaire à la direction de déplacement des flans de tôle, lesdites rails à billes et lesdites bandes s'étendant parallèlement à la direction de déplacement des flans de tôle et lesdites bandes étant déplaçables horizontalement et reliées chacune à des moyens d'entraînement débrayables pour régler le positionnement des plots de chaque bande par rapport aux plots des autres bandes en fonction du profil desdits flans de tôle.

Selon d'autres caractéristiques de l'invention :
- le plan de guidage des rails à billes est situé au-dessus des bandes à plots et une partie des plots est située au-dessus dudit plan de guidage,
- les plots sont de forme cylindrique et montés libres en rotation autour d'un axe vertical,
- les organes à friction sont formés par des rouleaux parallèles entraînés en rotation et dont les axes forment avec la direction de déplacement des flans de tôle un angle compris entre 75 et 85°,
- la vitesse de rotation des rouleaux est inférieure ou égale à la vitesse de déplacement des bandes à plots,
- les rouleaux sont recouverts de polyuréthanne,
- les moyens d'entraînement des bandes à plots sont formés par un arbre moteur entraînant chaque bande à plots par l'intermédiaire d'un tambour destiné à être solidarisé avec ledit arbre moteur par un embrayage commandé par un vérin, par exemple hydraulique,
- chaque tambour comporte un alésage central biconique dont les pentes convergent vers l'axe dudit tambour,
- chaque embrayage est formé par un moyeu comportant deux bagues indépendantes de profil extérieur conique et solidaires en rotation avec l'arbre moteur, chaque bague étant déplaçable en translation l'une vers l'autre parallèlement audit arbre moteur sous l'action du vérin correspondant pour solidariser en rotation le tambour correspondant et l'arbre moteur,
- un ressort est interposé entre lesdites bagues de chaque embrayage.

L'invention sera mieux comprise à l'aide de la description qui va suivre, donnée uniquement à titre d'exemple, et faite en se référant aux dessins annexés, sur lesquels :
- la Fig. 1 est une vue schématique de dessus d'un exemple de réalisation d'une installation de soudage bord à bord en continu de flans de tôle au moyen d'un faisceau laser et comportant un dispositif de positionnement de chaque flan de tôle selon l'invention,
- la Fig. 2 est une vue schématique de dessus du dispositif de positionnement des flans de tôle selon l'invention,
- la Fig. 3 est une vue en coupe selon la ligne 3-3 de la Fig. 2,
- la Fig. 4 est une vue schématique en perspective d'une portion d'une bande à plots du dispositif de positionnement selon l'invention,
- la Fig. 5 est une vue en coupe selon la ligne 5-5 de la Fig. 2,
- la Fig. 6 est une vue en coupe selon la ligne 6-6 de la Fig. 1,
- la Fig. 7 est une vue schématique en élévation de plusieurs patins d'une chaîne à patins articulés,
- la Fig. 8 est une vue de dessus de la Fig.7.

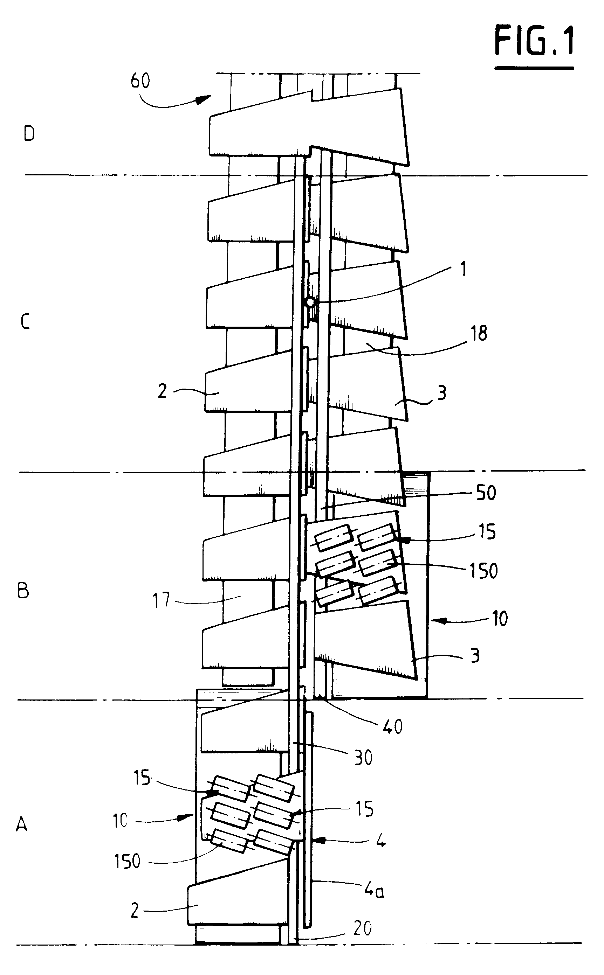

La Fig. 1 représente un exemple d'une installation destinée à l'accostage et au soudage bord à bord en continu au moyen d'un faisceau laser 1 successivement de plusieurs paires de flans de tôle 2 et 3 de différentes formes géométriques et/ou de différentes épaisseurs, par exemple pour l'industrie automobile.

Les deux flans de tôles 2 et 3 de chaque paire sont placés bord à bord et défilent en continu au-dessous du faisceau laser 1 en vue de leur soudage.

Dans ce but, l'installation de soudage représentée à la Fig. 1 comporte, après découpage des flans de tôle 2 et 3 :
A) une zone A de positionnement latéral du premier flan de tôle 2 à souder par rapport à l'axe du faisceau laser 1,
B) une zone B d'accostage bord à bord des flans de tôles 2 et 3 à souder,
C) une zone C de guidage, de transfert et de soudage des deux flans de tôle 2 et 3,
D) une zone D d'évacuation des deux flans de tôles 2 et 3 soudés.

Dans le but de garantir une bonne qualité de soudure, le positionnement des flans de tôle 2 et 3 doit satisfaire, dans la zone C de soudage, à plusieurs exigences qui sont notamment la position relative des bords à souder par rapport à l'axe du faisceau laser 1 et la pression relative sur ces bords afin de contrôler, voire réduire le jeu entre lesdits bords au cours du déplacement des flans de tôle 2 et 3.

Pour cela, les zones A et B comportent chacune respectivement un dispositif de positionnement du premier et du second flan de tôle 2 et 3.

Les flans de tôles 2 et 3 sont préalablement découpés et avant d'être transférés dans l'installation de soudage sont disposés en pile de part et d'autre de ladite installation.

Le dispositif de positionnement du premier flan de tôle 2 comporte des moyens 10 de support selon un plan de référence horizontal et d'entraînement du premier flan de tôle 2 en direction du faisceau laser et des moyens 4 de positionnement latéral du bord à souder dudit premier flan de tôle dans l'axe du faisceau laser 1.

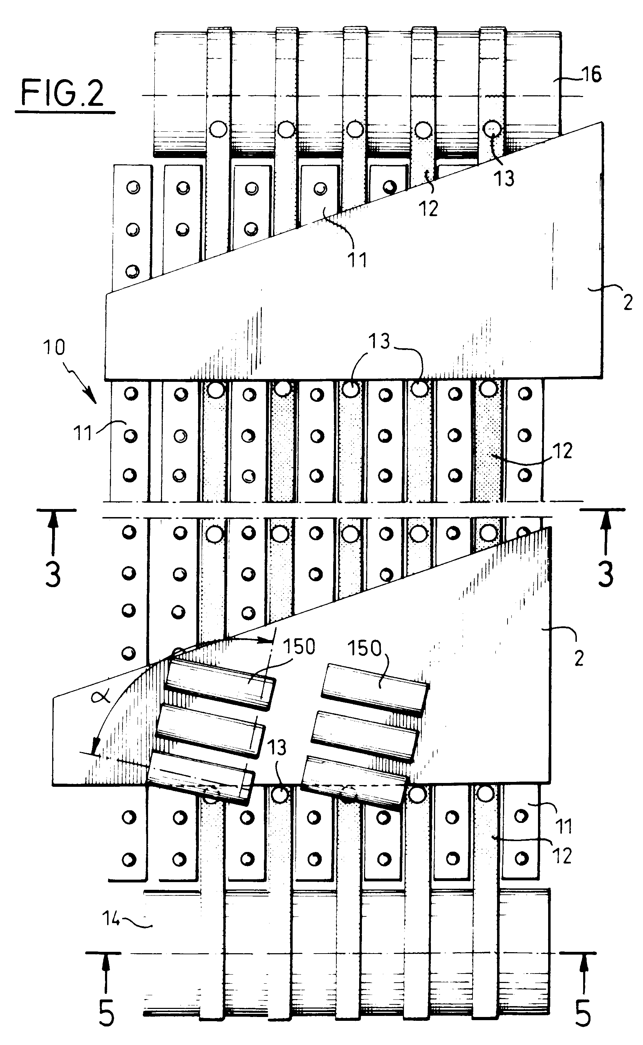

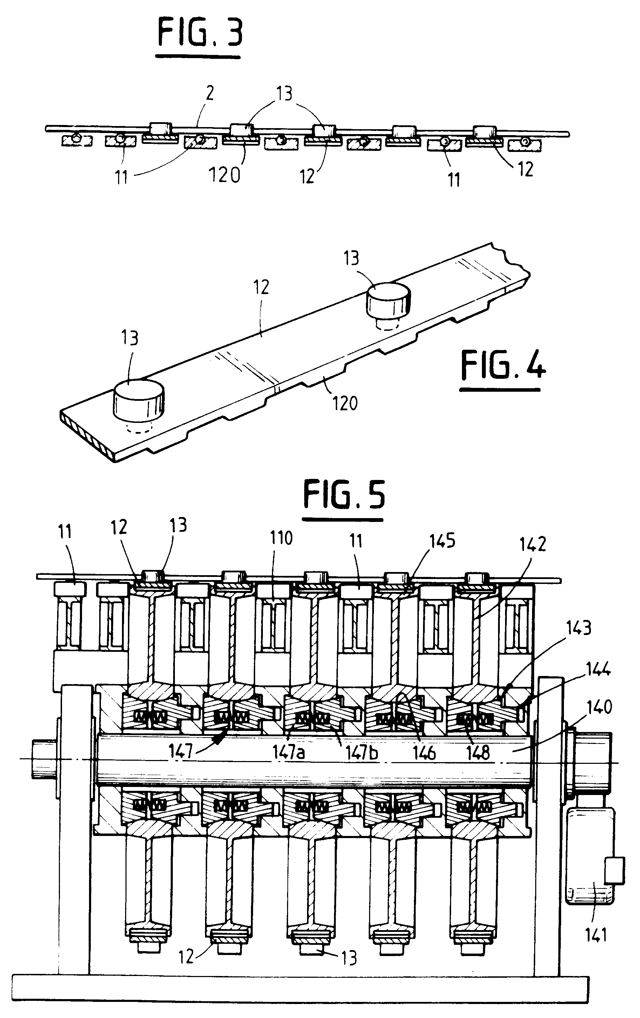

Comme représenté sur les Fig. 2 et 3, ces moyens de support et d'entraînement du premier flan de tôle 2 comprennent une table de transfert formée par une alternance de rails à billes 11 et de bandes 12 munies de plots 13 en saillie et régulièrement espacés.

Les rails à billes 11 et les bandes 12 s'étendent parallèlement à la direction de déplacement des flans de tôle 2 et les bandes 12 sont déplaçables horizontalement et reliées chacune à des moyens 14 d'entraînement et débrayables pour régler la position des plots 13 de chaque bande 12 par rapport aux plots 13 des autres bandes 12 en fonction du profil des flans de tôle 2.

Comme représenté sur les Figs. 1 et 2, les moyens 10 de support et d'entraînement du premier flan de tôle 2 comprennent également des organes à friction 15 destinés à s'appliquer sur la face supérieure du premier flan de tôle 2 et à imprimer auxdits premiers flans de tôle une translation sensiblement perpendiculaire à la direction de déplacement dudit premier flan de tôle.

Dans la zone A, les moyens de positionnement latéral du bord à souder du premier flan de tôle 2 sont formés par une butée longitudinale 4a constituant un guide, disposée verticalement pour que le plan passant par sa face latérale située en regard des rails à billes 11, soit confondu avec l'axe du faisceau laser 1.

La butée 4a peut être constituée par les génératrices de rouleaux cylindriques d'axe vertical alignés selon le plan de référence et permettant un contact roulant.

Comme représenté à la Fig. 3, le plan de guidage des rails à billes 11 est situé au-dessus des bandes à plots 12 et une partie des plots 13 est située au-dessus de ce plan de guidage.

Les plots 13 sont de forme cylindrique et sont montés libres en rotation autour d'un axe vertical sur la bande 12.

Chaque bande 12 est constituée, de manière classique, par une courroie comportant sur sa face destinée à coopérer avec les moyens 14 d'entraînement, des dents 120 s'étendant perpendiculairement à l'axe longitudinal de la courroie (Fig. 4).

Chaque bande à plots 12 forme une boucle comportant à une extrémité les moyens d'entraînement 14 et à l'extrémité opposée, un tambour 16 monté libre en rotation.

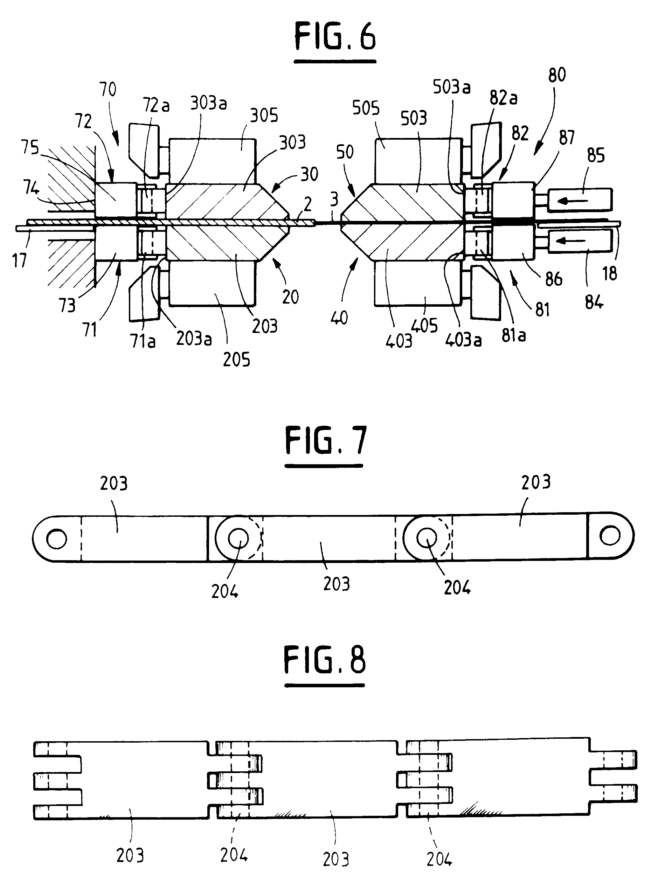

En se reportant maintenant à la Fig. 5, on va décrire plus en détail les moyens 14 d'entraînement et débrayables des bandes à plots 12.

Ces moyens 14 d'entraînement des bandes à plots 12 sont formés par un arbre moteur 140 entraîné par un moteur 141.

L'arbre moteur 140 entraine chaque bande à plots 12 par l'intermédiaire d'un tambour 142 destiné à être solidarisé avec ledit arbre moteur 140 par l'intermédiaire d'un embrayage 143 commandé par un vérin 144, par exemple hydraulique.

L'ensemble des tambours 142 et des embrayages 143 destinés à solidariser les bandes à plots 12 avec l'arbre moteur 140 est identique et on se limitera à décrire dans ce qui suit un tambour et un embrayage.

Le tambour 142 comporte une couronne périphérique 145 comportant sur sa surface externe des dents, non représentées, destinées à coopérer avec les dents 120 de la bande à plots 12 correspondante.

Le tambour 142 comporte un alésage central 146 biconique dont les pentes convergent vers l'axe dudit tambour.

L'embrayage 144 est formé par un moyeu 147 formé de deux bagues 147a et 147b indépendantes de profil extérieur conique et solidaires en rotation avec l'arbre moteur 140 par exemple au moyen de cannelures, non représentées.

Chaque bague 147a et 147b est déplaçable en translation l'une vers l'autre parallèlement à l'arbre moteur 140 sous l'action du vérin 144 correspondant par exemple du type annulaire, pour solidariser en rotation le tambour 145 avec ledit arbre moteur 140.

Un ressort 148 est interposé entre les bagues 147a et 147b.

La mise en pression des vérins 144 entre chaque tambour 142 comprime chaque moyeu 147 en resserrant les bagues 147a et 147b sur les alésages biconiques 146 des tambours 142, rendant ceux-ci solidaires du moyeu 147 et donc de l'arbre moteur 140 pendant sa rotation.

Ainsi, pour régler le décalage angulaire des tambours 142, c'est à dire la position des plots 13 de chaque bande 12 par rapport aux plots 13 des autres bandes en fonction du profil du premier flan de tôle 2, il suffit de libérer les tambours 142 pour le réglage, puis de les solidariser avec l'arbre moteur 140 grâce aux vérins 144, les alésages biconiques 146 servant de guidage aux tambours 142.

La disposition choisie pour les embrayages et tambours permet d'éviter un déplacement axial trop important desdits tambours lors de l'embrayage, ce qui nuirait au fonctionnement du dispositif.

Les rails à billes 11 sont supportés par des entretoises 110 disposées entre les tambours 142.

Comme représenté à la Fig. 2, les organes à friction 15 destinés à s'appliquer sur la face supérieure du premier flan de tôle 2 et à imprimer à celui-ci une translation sensiblement perpendiculaire à la direction de déplacement du premier flan de tôle sont formés par des rouleaux 150 parallèles et entraînés en rotation.

L'axe de chaque rouleaux 150 forme avec la direction de déplacement du premier flan de tôle 2 un angle α compris entre 75 et 85°.

La vitesse de rotation des rouleaux 150 est inférieure ou égale à la vitesse de déplacement des bandes à plots 12 pour que ces bandes à plots 12 puissent rester en contact avec le bord du premier flan de tôle 2 et la vitesse de composante perpendiculaire à la direction de déplacement du premier flan de tôle 2 est différente de zéro de telle manière que le contact du bord à souder du premier flan de tôle 2 sur la butée 4a soit positif.

Les rouleaux 150 sont recouverts de polyuréthanne.

Dans l'exemple de réalisation représenté à la Fig. 1, la zone A comporte également une chaîne inférieure 20 à patins articulés qui supporte une partie du premier flan de tôle 2 située à proximité du bord à souder, tandis que les rails à billes 11 et les bandes à plots 12 supportent l'autre partie dudit premier flan de tôle.

Cette zone A comporte également l'amorce d'une chaîne supérieure 30 à patins articulés constituant une surface de contact continue avec la face supérieure du premier flan de tôle 2.

La chaîne supérieure 30 à patins articulés est disposée en regard de la chaîne inférieure 20 à patins articulés correspondante et est destinée à coopérer avec celle-ci pour déplacer le premier flan de tôle 2 par adhérence et à maintenir ledit premier flan de tôle 2 en référence longitudinale et latérale.

La chaîne inférieure 20 à patins articulés et la chaîne supérieure 30 à patins articulés seront décrites plus en détail ultérieurement.

En fonction du profil d'une série de flans de tôle 2, la position des plots 13 de chaque bande 12 est réglée par l'intermédiaire des embrayages 143 et les flans de tôle 2 sont posés sur les rails à billes 11, par des moyens appropriés non représentés, comme par exemple un robot manipulateur.

Ensuite, les plots 13 des bandes 12 entraînés longitudinalement entrent en contact avec un bord du premier flan de tôle 2 qui est ainsi déplacé longitudinalement.

Le premier flan de tôle 2 passe sous les rouleaux 150 qui impriment audit flan de tôle 2 une translation sensiblement perpendiculaire à la direction de déplacement de ce flan de tôle 2 de telle manière que le bord à souder dudit flan de tôle 2 entre en contact avec la face latérale de la butée 4a et soit ainsi positionné dans l'axe du faisceau laser 1.

La chaîne inférieure 20 à patins articulés est entraînée en synchronisation avec les bandes à plots 12 et supporte une partie du premier flan 2.

Les rouleaux 150 maintiennent les bords à souder du flan de tôle 2 contre la butée 4a et, avant que ce flan de tôle 2 quitte les rouleaux 150, une partie dudit flan de tôle 2 est pincée entre la chaîne inférieure 20 à patins articulés et la chaîne supérieure 30 à patins articulés de telle manière que le flan de tôle 2 soit maintenu en référence par lesdites chaînes 20 et 30 à patins articulés à la fin de la zone A.

La zone B de l'installation représentée à la Fig. 1 comporte un tapis transporteur 17 horizontal constituant une première surface de contact continue avec la face inférieure du premier flan de tôle 2, la chaîne inférieure 20 à patins articulés constituant une seconde surface de contact continue avec la face inférieure du premier flan de tôle 2 située à proximité du bord à souder et enfin la chaîne supérieure 30 à patins articulés disposée en regard de la chaîne inférieure 20 à patins articulés est destinée à coopérer avec cette dernière pour déplacer ledit premier flan de tôle 2 par adhérence, comme à la fin de la zone A.

Le tapis transporteur 17 horizontal est par exemple un tapis à rouleaux montés libres en rotation ou un tapis à billes ou peut être un tapis roulant se déplaçant longitudinalement en synchronisation avec la chaîne inférieure 20 à patins articulés.

La zone B comporte également un dispositif de positionnement du second flan de tôle 3 comportant des moyens 10 de support selon un plan de référence horizontal et d'entraînement du second flan de tôle 3 en direction du faisceau laser 1.

Ces moyens 10 de support et d'entraînement du second flan de tôle 3 sont identiques au moyen 10 de support et d'entraînement du premier flan de tôle 2 et comportent, d'une part, une table de transfert formée par une alternance de rails à billes 11 et de bandes 12 munies de plots 13 en saillie, régulièrement espacés et, d'autre part, des organes à friction 15 constitués par les rouleaux 150 et destines à s'appliquer sur la face supérieure du second flan de tôle 3 et à imprimer audit second flan de tôle 3 une translation sensiblement perpendiculaire à la direction de déplacement des flans de tôles 2 et 3.

La zone B comporte également une chaîne inférieure 40 à patins articulés supportant une partie du second flan de tôle 3 située à proximité du bord à souder, tandis que les rails à billes 11 supportent l'autre partie dudit second flan de tôle 3.

A la fin de la zone B, une chaîne supérieure 50 à patins articulés constitue une surface de contact continue avec la face supérieure dudit second flan de tôle 3.

La chaîne supérieure 50 à patins articulés est disposée en regard de la chaîne inférieure 40 à patins articulés et est destinée à coopérer avec cette dernière pour déplacer le second flan de tôle 3 par adhérence.

La chaîne inférieure 40 à patins articulés et la chaîne supérieure 50 à patins articulés forment des moyens de maintien en référence longitudinale et latérale du second flan de tôle 3.

Les flans de tôle 3 posés sur les rails à billes 11 par des moyens appropriés, non représentés, comme par exemple un robot manipulateur, sont déplacés par les plots 13 des bandes 12 et, sous l'effet des rouleaux 150 glissent latéralement sur lesdites rails à billes 11 de telle manière que le bord à souder de chaque second flan de tôle 3 entre en contact avec le bord à souder de chaque premier flan de tôle 2 et soit par conséquent positionné dans l'axe du faisceau laser 1.

Les rouleaux 150 maintiennent le bord à souder du second flan de tôle 3 contre le bord à souder du premier flan de tôle 2 et, avant que ce second flan de tôle 3 quitte les rouleaux 150, une partie de ce second flan de tôle 3 est pincée entre la chaîne inférieure 40 à patins articulés et la chaîne supérieure 50 à patins articulés pour maintenir le bord à souder dudit second flan de tôle 3 contre le bord à souder dudit premier flan de tôle 2.

A la fin de la zone B, les bords à souder des flans de tôle 2 et 3 sont donc positionnés dans l'axe du faisceau laser 1.

La zone C de guidage, de transfert et de soudage des deux flans de tôles 2 et 3 comportent des moyens de support longitudinal du premier flan de tôle 2 selon un plan de référence horizontal qui sont constitués par le tapis transporteur horizontal 13 et la chaîne inférieure 20 à patins articulés de la zone B qui se prolongent dans la zone C.

La zone C comporte également des moyens de maintien en référence longitudinale et latérale du premier flan de tôle 2, déplaçables horizontalement, qui sont constitués par la chaîne supérieure 30 à patins articulés de la zone B qui se prolonge dans la zone C et qui est destinée à coopérer avec la chaîne inférieure 20 à patins articulés pour déplacer le premier flan de tôle 2 par adhérence.

La zone C comporte aussi des moyens de support longitudinal du second flan de tôle 3 qui sont formés par un tapis transporteur 18 horizontal constituant une première surface de contact continue avec la face inférieure dudit second flan de tôle 3.

Ce tapis transporteur 18 horizontal est juxtaposé à la chaîne inférieure 40 à patins articulés de la zone B, s'étendant sur la zone C et constituant une seconde surface de contact continue avec la face inférieure dudit second flan de tôle 3.

Le tapis transporteur 18 horizontal est par exemple un tapis à rouleaux montés libres en rotation ou un tapis à billes ou peut être un tapis roulant se déplaçant longitudinalement en synchronisation avec la chaîne inférieure 40 à patins articulés.

La chaîne inférieure 40 à patins articulés supporte une partie du second flan de tôle 3 située à proximité du bord à souder et le tapis transporteur 18 supporte l'autre partie du flan de tôle 3.

La chaîne supérieure 50 à patins articulés se prolonge également dans la zone C pour maintenir en référence longitudinale et latérale le second flan de tôle 3.

Les tapis transporteurs 17, 18 et les chaînes 20, 30, 40, 50 à patins articulés se déplacent longitudinalement en synchronisation les uns avec les autres et également avec les bandes à plots 12.

Enfin la zone D d'évacuation des deux flans de tôle soudés comporte des moyens 60 de support desdits flans de tôle soudés et des moyens, non représentés, d'enlèvement de ces flans de tôle soudés.

Ces moyens 60 de support peuvent être constitués par une table de transfert, par exemple par une table à rouleaux ou à billes et les moyens d'enlèvement peuvent être constitués par un robot manipulateur.

Ces moyens 60 de support des flans de tôle soudés peuvent également être constitués par les tapis transporteur 17 et 18 et les chaînes inférieures 20 et 40 de la précédente zone C qui se prolongent dans la zone D.

La zone D peut également comporter des moyens de contrôle de la soudure, de brossage et de huilage de cette soudure.

En se reportant maintenant aux Figs. 6 à 8, on va décrire plus en détail les chaînes à patins articulés.

Les chaînes 20, 30, 40 et 50 à patins articulés forment chacune une boucle dans un plan perpendiculaire aux flans de tôle 2 et 3.

Chaque chaîne 20, 30, 40 et 50 à patins articulés est portée par une paire de roues, non représentées, disposées chacune à une extrémité de ladite boucle.

L'entraînement de chaque chaîne 20, 30, 40 et 50 à patins articulés est réalisé par exemple par un système motoréducteur relié à une des roues.

La chaîne inférieure 20 comprend des patins 203 de forme générale parallélépipèdique et articulés entre eux au moyen de tiges 204, comme représenté sur les Fig. 7 et 8.

La chaîne inférieure 20 comporte également des rouleaux 205 d'appui, libres en rotation et destinés à coopérer avec la face des patins 203 opposée à celle en contact avec le second flan de tôle 2.

Ces rouleaux 205 cylindriques à génératrice droite, sont relativement rapprochés les uns des autres, l'axe de rotation desdits rouleaux étant perpendiculaire au sens de déplacement de la chaîne inférieure 20 et horizontal.

Ces rouleaux 205 supportent la chaîne inférieure 20 de telle sorte que la surface de ladite chaîne en contact avec la face inférieure du premier flan de tôle 2 détermine un plan de référence horizontal pour le positionnement dudit flan.

La chaîne supérieure 30 est constituée de patins 303 de forme générale parallélépipèdique et articulés entre eux au moyen de tiges non représentées.

Cette chaîne supérieure 30 comporte des rouleaux d'appui 305, libres en rotation et destinés à coopérer avec la face des patins 303 opposée à celle en contact avec le premier flan de tôle 2.

Ces rouleaux 305 cylindriques à génératrice droite sont relativement rapprochés les uns des autres, l'axe de rotation desdits rouleaux étant perpendiculaire au sens de déplacement de la chaîne supérieure 30 et horizontal.

Les rouleaux 305 sont positionnés de telle façon qu'ils exercent une pression superficielle verticale sur les patins 303 de la chaîne supérieure 30 de façon à pincer le premier flan de tôle 2 entre les patins 203 et 303.

Au moins trois rouleaux 305 sont en contact avec chaque patin 303 en des endroits régulièrement espacés, répartissant l'effort de compression sur le premier flan de tôle 2 afin de maintenir une bonne planéité des patins 303 et de permettre une répartition de l'effort par plusieurs contacts linéaires.

La chaîne inférieure 40 comprend des patins 403 de forme générale parallélépipèdique et articulés entre eux au moyen de tiges non représentées.

Cette chaîne inférieure 40 comporte des rouleaux d'appui 405, libres en rotation et destinés à coopérer avec la face des patins 403 opposée à celle en contact avec le second flan de tôle 3.

Les rouleaux 405 cylindriques, à génératrice droite, sont relativement rapprochés les uns des autres, l'axe de rotation desdits rouleaux étant perpendiculaire au sens de déplacement de la chaîne inférieure 40 et horizontal.

Ces rouleaux 405 supportent la chaîne inférieure 40 de telle sorte que la surface de ladite chaîne inférieure 40 en contact avec la face inférieure du second flan de tôle 3 détermine un plan de référence horizontal pour le positionnement dudit flan de tôle.

Au moins trois rouleaux 405 sont en contact avec chaque patin 403.

La chaîne supérieure 50 comprend des patins 503 de forme générale parallélépipèdique et articulés entre eux au moyen de tiges 504 non représentées.

Cette chaîne supérieure 50 comporte des rouleaux d'appui 505, libres en rotation et destinés à coopérer avec la face des patins 503 opposée à celle en contact avec le second flan de tôle 3.

Ces rouleaux 505 à génératrice droite sont relativement rapprochés les uns des autres, l'axe de rotation desdits rouleaux étant perpendiculaire au sens de déplacement de la chaîne supérieure 50 et horizontal.

Les rouleaux d'appui 505 sont positionnés de telle façon qu'ils exercent une pression superficielle verticale sur les patins 503 de la chaîne supérieure 50 de façon à presser le second flan de tôle 3 sur les patins 403 et 503.

Au moins trois rouleaux 505 sont en contact avec chaque patin 503 en des endroits régulièrement espacés répartissant l'effort de compression sur le second flan de tôle 3 afin de maintenir une bonne planéité des patins 503 et de permettre une répartition de l'effort sur plusieurs contacts linéaires.

Chaque flan de tôle 2 ou 3, après avoir été progressivement coincé entre les patins respectivement 203 et 303, 403 et 503 dans les zones A et B de l'installation est guidé et entraîné par adhérence dans la zone C entre ces patins grâce à la pression superficielle exercée par les rouleaux, respectivement 205 et 305, 405 et 505.

Les chaînes 20, 30, 40 et 50 à patins articulés sont entraînées en synchronisation les unes avec les autres ce qui permet d'entraîner les flans de tôle 2 et 3 dans la direction du soudage sans aucun glissement possible desdits flans de tôle par rapport aux patins sous pression.

La fin de la zone A et les zones B et C sont pourvues de moyens 70 de maintien du bord à souder du premier flan de tôle 2 dans l'axe du faisceau laser 1.

Comme représenté sur la Fig. 6, ces moyens 70 du maintien du bord à souder du premier flan de tôle 2 sont formés par deux chemins de guidage 71 et 72 latérales, parallèles et disposés de part et d'autre du plan horizontal de déplacement des flans de tôle 2 et 3.

Le chemin de guidage 71 est formé par des galets 71a à axe vertical et libres en rotation, lesdits galets 71a étant en appui sur la surface latérale 203a des patins 203 de la chaîne inférieure 20 et montés sur un support 73 fixé sur une surface de référence verticale 74.

Le chemin de guidage 72 est également formé par des galets 72a à axe vertical et libres en rotation, lesdits galets 72a étant en appui sur la surface latérale 303a des patins 303 de la chaîne supérieure 30 et montés sur un support 75 fixé sur la surface de référence verticale 74.

Cette disposition permet grâce aux chemins de guidage 71 et 72 et à la surface de référence 74 de maintenir le bord à souder du premier flan de tôle 2, préalablement positionné dans la zone A de l'installation, dans l'axe du faisceau laser 1.

La fin de la zone B et la zone C sont pourvues de moyens 80 de mise en pression latérale des bords à souder des deux flans de tôle 2 et 3.

Comme représenté sur la Fig. 6, ces moyens 80 de mise en pression latérale des bords à souder des deux flans de tôle 2 et 3 sont formés par deux chemins de guidage 81 et 82 latérales, parallèles et disposés de part et d'autre du plan horizontal de déplacement desdits flans de tôle.

Le chemin de guidage 81 coopère, d'une part, avec les patins 403 de la chaîne inférieure 40 et, d'autre part, avec au moins un organe de poussée 84 selon une direction perpendiculaire au plan de joint des flans de tôle 2 et 3.

Le chemin de guidage 82 coopère, d'une part, avec les patins 503 de la chaîne supérieure 50 et, d'autre part, avec au moins un organe de poussée 85 selon une direction perpendiculaire au plan de joint des flans de tôle 2 et 3.

Le chemin de guidage 81 est formé par des galets 81a à axe vertical et libres en rotation, lesdits galets 81a étant en appui sur la surface latérale 403a des patins 403 de la chaîne inférieure 40 et montés sur un support 86 relié à l'organe de poussée 84.

Le chemin de guidage 82 est formé par des galets 82a à axe vertical et libres en rotation, lesdits galets 82a étant en appui sur la surface latérale 503a des patins 503 de la chaîne supérieure 50 et montés sur un support 87 relié à l'organe de poussé 85.

## Revendications

1. Dispositif de positionnement de flans de tôle (2, 3) dans une installation de soudage bord à bord en continu d'au moins deux desdits flans de tôle au moyen d'un faisceau laser (1), ledit dispositif comportant des moyens (10) de support selon un plan de référence horizontal et d'entraînement des flans de tôle (2, 3) en direction du faisceau laser (1) et des moyens de positionnement latéral des bords à souder des flans (2, 3) dans l'axe du faisceau laser (1), caractérisé en ce que lesdits moyens (10) de support et d'entraînement des flans de tôle comprennent, d'une part, une table de transfert formée par une alternance de rails à billes (11) et de bandes (12) munies de plots (13) en saillie, régulièrement espacés et, d'autre part, des organes à friction (15) destinés à s' appliquer sur la surface supérieure des flans de tôle (2, 3) et à imprimer auxdits flans de tôle une translation sensiblement perpendiculaire à la direction de déplacement des flans de tôle (2, 3), lesdits rails à billes (11) et lesdites bandes (12) s'étendant parallèlement à la direction de déplacement des flans de tôle (2, 3) et lesdites bandes (12) étant déplaçables horizontalement et reliées chacune à des moyens (14) d'entraînement, débrayables pour régler la position des plots (13) de chaque bande (12) par rapport aux plots (13) des autres bandes (12) en fonction du profil des flans de tôles (2, 3).

2. Dispositif selon la revendication 1, caractérisé en ce que le plan de guidage des rails à billes (11) est situé au-dessus des bandes à plots (12) et une partie des plots (13) est située au-dessus dudit plan de guidage.

3. Dispositif selon les revendications 1 et 2, caractérisé en ce que les plots (13) sont de forme cylindrique et montés libres en rotation autour d'un axe vertical.

4. Dispositif selon la revendication 1, caractérisé en ce que les organes à friction (15) sont formés par des rouleaux (150) parallèles, entraînés en rotation et dont les axes forment avec la direction de déplacement des flans de tôle (2, 3) un angle compris entre 75 et 85°.

5. Dispositif selon les revendications 1 et 4, caractérisé en ce que la vitesse de rotation des rouleaux (150) est inférieure ou égale à la vitesse de déplacement des bandes à plots (12).

6. Dispositif selon les revendications 4 et 5, caractérisé en ce que les rouleaux (150) sont recouverts de polyuréthanne.

7. Dispositif selon la revendication 1, caractérisé en ce que les moyens (14) d'entraînement des bandes à plots sont formés par un arbre moteur (140) entraînant chaque bande à plots (12) par l'intermédiaire d'un tambour (142) destiné à être solidarisé avec ledit arbre moteur (140) par un embrayage (143) commandé par un vérin (144), par exemple hydraulique.

8. Dispositif selon la revendication 7, caractérisé en ce que chaque tambour (142) comporte un alésage central (146) biconique dont les pentes convergent vers l'axe dudit tambour (142).

9. Dispositif selon la revendication 7, caractérisé en ce que chaque embrayage (143) est formé par un moyeu (147) comportant deux bagues indépendantes (147a, 147b) de profil extérieur conique et solidaires en rotation avec l'arbre moteur (140), chaque bague (147a, 147b) étant déplaçable en translation l'une vers l'autre parallèlement audit arbre moteur (140) sous l'action du vérin (144) correspondant pour solidariser en rotation le tambour (142) correspondant et l'arbre moteur (140).

10. Dispositif selon la revendication 9, caractérisé en ce qu'un ressort (148) est interposé entre lesdites bagues (147a, 147b) de chaque embrayage (143).

## Claims

1. Device for positioning sheet metal blanks (2, 3) in an installation for continuous edge to edge welding of these sheet metal blanks by means of a laser beam (1), the said device comprising means (10) for support according to a horizontal reference plane and for driving the sheet metal blanks (2, 3) in the direction of the laser beam (1) and means for lateral positioning of the edges of the blanks (2, 3) to be welded in the axis of the laser beam (1), characterised in that the said means (10) for support and driving the sheet metal blanks comprise on the one hand a transfer table formed by alternating ball rails (11) and slats (12) equipped with projecting studs (13), regularly spaced, and on the other hand friction elements (15) intended to be applied to the upper surface of the sheet metal blanks (2, 3) and to communicate to the said sheet metal blanks a translation which is substantially perpendicular to the direction of displacement of the sheet metal blanks (2, 3), the said ball rails (11) and the said slats (12) extending parallel to the direction of displacement of the sheet metal blanks (2, 3) and the said slats (12) being capable of displacement horizontally and each being connected to driving means (14) which can be disengaged in order to regulate the position of the studs (13) of each slat (12) with respect to the studs (13) of the other slats (12) as a function of the profile of the sheet metal blanks (2, 3).

2. Device as claimed in Claim 1, characterised in that the plane of guiding of the ball rails (11) is situated above the studded slats (12) and a part of the studs (13) is situated above the said plane of guiding.

3. Device as claimed in Claims 1 and 2, characterised in that the studs (13) are cylindrical in shape and are mounted so as to rotate freely about a vertical axis.

4. Device as claimed in Claim 1, characterised in that the friction elements (15) are formed by parallel rollers (150) which are driven in rotation and of which the axes form an angle between 75 and 85° with the direction of displacement of the sheet metal blanks (2, 3).

5. Device as claimed in Claims 1 and 4, characterised in that the speed of rotation of the rollers (150) is lower than or equal to the speed of displacement of the studded slats (12).

6. Device as claimed in Claims 4 and 5, characterised in that the rollers (150) are coated with polyurethane.

7. Device as claimed in Claim 1, characterised in that the means (14) for driving the studded slats are formed by a drive shaft (140) driving each studded slat (12) through the intermediary of a drum (142) intended to be joined to the said drive shaft (140) by a clutch (143) controlled by a jack (144), for example a hydraulic jack.

8. Device as claimed in Claim 7, characterised in that each drum (142) has a biconical central bore of which the slopes converge towards the axis of the said drum (142).

9. Device as claimed in Claim 7, characterised in that each clutch (143) is formed by a means (147) comprising two independent rings (147a, 147b) of conical external profile and fixed in rotation with the drive shaft (140), each ring (147a, 147b) being capable of displacement in translation towards the other parallel to the said drive shaft (140) under the action of a corresponding jack (144) in order to fix the corresponding drum (142) and the drive shaft (140) in rotation.

10. Device as claimed in Claim 9, characterised in that a spring (148) is interposed between the said rings (147a, 147b) of each clutch (143).

## Patentansprüche

1. Vorrichtung zum Anordnen von Blechtafeln (2, 3) in einer Einrichtung zum kontinuierlichen Stumpfschweißen wenigstens zweier dieser Blechtafeln mittels eines Laserstrahls (1), wobei die Vorrichtung eine Einrichtung (10) zum Stützen in einer horizontalen Referenzebene und zum Transportieren der Blechtafeln (2, 3) in Richtung auf den Laserstrahl (1) sowie eine Einrichtung zur seitlichen Positionierung der zu verschweißenden Ränder der Tafeln (2, 3) in der Achse des Laserstrahls (1) aufweist, dadurch gekennzeichnet, daß die Einrichtung (10) zum Stützen und Transportieren der Blechtafeln einerseits einen Übergabetisch, der aus einer Wechselfolge von Kugelschienen (11) und Bändern (12) gebildet ist, die mit regelmäßig beabstandeten vorstehenden Pufferteilen (13) versehen sind, und andererseits Reiborgane (15) aufweist, die zur Auflage auf den Oberseiten der Blechtafeln (2, 3) und zum Aufbringen einer zu der Verschiebungsrichtung der Blechtafeln (2, 3) im wesentlichen senkrechten Translationsbewegung auf die Blechtafeln dienen, wobei sich die Kugelschienen (11) und die Bänder (12) parallel zur Verschiebungsrichtung der Blechtafeln (2, 3) erstrecken und die Bänder (12) horizontal verschiebbar und jeweils mit Antriebsmitteln (14) verbunden sind, die auskuppelbar sind, um die Positionen der Pufferteile (3) jedes Bandes (12) in bezug auf die Pufferteile (13) der anderen Bänder (12) in Abhängigkeit vom Profil der Blechtafeln (2, 3) einzustellen.

2. Vorrichtung nach Anspruch 1, dadurch gekennzeichnet, daß die Führungsebene der Kugelschienen (11) oberhalb der mit Pufferteilen versehenen Bänder (12) verläuft und ein Abschnitt der Pufferteile (13) oberhalb dieser Führungsebene verläuft.

3. Vorrichtung nach den Ansprüchen 1 und 2, dadurch gekennzeichnet, daß die Pufferteile (13) zylindrisch ausgebildet und frei um eine vertikale Achse drehbar angebracht sind.

4. Vorrichtung nach Anspruch 1, dadurch gekennzeichnet, daß die Reiborgane (15) durch parallele Walzen (150) gebildet sind, die drehend angetrieben sind und deren Achsen mit der Verschiebungsrichtung der Blechtafeln (2, 3) einen Winkel zwischen 75 und 85° bilden.

5. Vorrichtung nach einem der Ansprüche 1 bis 4, dadurch gekennzeichnet, daß die Drehgeschwindigkeit der Walzen (150) geringer oder gleich der Verschiebungsgeschwindigkeit der mit Pufferteilen versehenen Bänder (12) ist.

6. Vorrichtung nach den Ansprüchen 4 und 5, dadurch gekennzeichnet, daß die Walzen (150) mit Polyurethan beschichtet sind.

7. Vorrichtung nach Anspruch 1, dadurch gekennzeichnet, daß die Antriebseinrichtung (14) der mit Pufferteilen versehenen Bänder durch eine Motorwelle (140) gebildet ist, die jedes der mit Pufferteilen versehenen Bänder (12) über eine Trommel (142) treibt, die über eine von einem beispielsweise hydraulischen Zylinder (144) betätigte Kupplung (143) fest mit der Motorwelle (140) verbindbar ist.

8. Vorrichtung nach Anspruch 7, dadurch gekennzeichnet, daß jede Trommel (142) eine zentrale doppelkonische Bohrung (146) aufweist, deren Schrägflächen zur Achse der Trommel (142) hin zusammenlaufen.

9. Vorrichtung nach Anspruch 7, dadurch gekennzeichnet, daß jede Kupplung (143) aus einer Habe (147) mit zwei voneinander unabhängigen Ringen (147a, 147b), die ein konisches Außenprofil haben und drehfest mit der Motorwelle (140) verbunden sind, wobei jeder Ring (147a, 147b) zur drehfesten Verbindung der jeweiligen Trommel (142) und der Motorwelle (140) unter Einwirkung des jeweiligen Zylinders (144) parallel zur Motorwelle (140) aufeinander zu verschiebbar sind.

10. Vorrichtung nach Anspruch 9, dadurch gekennzeichnet, daß eine Feder (148) zwischen den Ringen (147a, 147b) jeder Kupplung (143) angeordnet ist.
